# EUROPEAN PATENT APPLICATION

(11) **EP 4 525 413 A1**
(43) Date of publication of application: **19.03.2025**
(21) Application number: 23803392.2
(22) Date of filing: 21.04.2023
(51) Int. Cl.: H04L 67/55, B60R 16/023, H04L 65/4061

(54) **IN-VEHICLE COMMUNICATION DEVICE AND PUSH SERVER**

(30) Priority: 13.05.2022 JP 2022079541
(71) Applicant: DENSO CORPORATION, Kariya-city, Aichi-pref 448-8661 (JP)
(72) Inventor: IKUSHIMA, Keisuke, Kariya-city, Aichi-pref., 448-8661 (JP)
(74) Representative: Winter, Brandl - Partnerschaft mbB
(86) International application number: PCT/JP2023/015969
(87) International publication number: WO 2023/218910

(57) **Abstract**

When a push server (3) receives a transmission request of push data from an application server (2), the push server transmits the push data to an in-vehicle communication device (4), and the in-vehicle communication device transmits the received push data to an in-vehicle ECU (5). The in-vehicle communication device includes a reset execution determination unit (4a) determining whether a reset of the in-vehicle communication device is executable and a reset state information notification unit(4b) notifying, in response to determining that the reset of the in-vehicle communication device is executable, the push server of reset state information indicating that the in-vehicle communication device is in a reset state, in association with device identification information of the in-vehicle communication device before starting the reset of the in-vehicle communication device. The device identification information enables identifying of the in-vehicle communication device.

## Description

### CROSS REFERENCE TO RELATED APPLICATION

This application is based on Japanese Patent Application No. 2022-079541 filed on May 13, 2022, the disclosure of which is incorporated herein by reference.

### TECHNICAL FIELD

The present disclosure relates to an in-vehicle communication device and a push server.

### BACKGROUND ART

A push system that transmits push data is provided as one of remote request services for accessing, from outside of the vehicle, an application of an in-vehicle system from outside of the vehicle. In the push system, an application server and a push server are provided on the cloud, and an in-vehicle communication device and an in-vehicle electronic control unit (hereinafter referred to as in-vehicle ECU) are provided to the vehicle. When a cloud application is started by a smartphone terminal or the like and the push server receives, from the application server, a request to transmit push data, the push server transmits the push data to the in-vehicle communication device. The in-vehicle communication device transmits the push data received from the push server to the in-vehicle ECU, thereby transferring the push data to an application related to in-vehicle system. The application is installed in the in-vehicle ECU (for example, refer to Patent Literature 1).

### PRIOR ART LITERATURES

### PATENT LITERATURE

Patent Literature 1: JP 2019-192953 A

### SUMMARY

An in-vehicle communication device, which transmits push data received from a push server to an in-vehicle ECU, needs to be reset for the purpose of software update, state recovery, memory cleanup, and the like. The in-vehicle communication device cannot communicate data with the push server in a reset state. In the reset state, the in-vehicle communication device maintains a state in which data communication is disabled until startup is completed and a communication line is reconnected between the in-vehicle communication device and the push server. In the reset state, the push server recognizes that the in-vehicle communication device is unable to perform data communication with the push server, that is, in offline state. The push server cannot specify whether the data communication with the in-vehicle communication device is temporarily disabled or the data communication with the in-vehicle communication device is disabled due to an occurrence of abnormality. Therefore, when the application server transmits a transmission request of push data to the push server during the reset state of the in-vehicle communication device, the push server continuously fails to transmit the push data and continues to retry transmission of push data until the startup of in-vehicle communication device is completed and the communication line is connected between the in-vehicle communication device and the push server.

An object of the present disclosure is to properly receive, in an in-vehicle communication device, push data transmitted from a push server by suppressing the push server from continually retrying transmission of the push data. Another object of the present disclosure is to properly transmit the push data from the push server to an in-vehicle communication device.

According to an aspect of the present disclosure, an in-vehicle communication device transmits, to an in-vehicle electronic control unit, push data in response to receiving the push data from a push server. The push server transmits the push data to the in-vehicle communication device in response to reception of a transmission request of the push data from an application server. The in-vehicle communication device includes: a reset execution determination unit determining whether a reset of the in-vehicle communication device is executable; and a reset state information notification unit notifying, in response to determining that the reset of the in-vehicle communication device is executable, the push server of reset state information, which indicates that the in-vehicle communication device is in a reset state, in association with device identification information of the in-vehicle communication device before starting the reset of the in-vehicle communication device. The device identification information enables identifying of the in-vehicle communication device.

In response to determining that reset of the in-vehicle communication device is determined to executable, the in-vehicle communication device notifies the push server of the reset state information, which indicates the reset is in progress, in association with the device identification information of the in-vehicle communication device before starting execution of the reset. By associating the reset state information with the device identification information and notifying the push server of the reset state information together with the device identification information, the push server can identify that the in-vehicle communication device is in the reset state based on the device identification information, and can suspend transmission of push data until the in-vehicle communication device completes startup and reconnection of the communication line between the in-vehicle communication device and the push server is completed. The push server can avoid continuous failures in transmission of push data, and can avoid continuous retries in transmission of push data. This configuration can enable the in-vehicle communication device to properly receive the push data from the push server without the push server continually retrying transmission of the push data.

According to an aspect of the present disclosure, a push server transmits, in response to reception of a transmission request of push data from an application server, the push data to an in-vehicle communication device. A communication line between the push server and the in-vehicle communication device is disconnected when the in-vehicle communication device executes a reset. The push server includes: a reset state information setting unit setting reset state information, which indicates that the in-vehicle communication device is in a reset state, in association with the in-vehicle communication device that corresponds to a transmission source of the reset state information; a reset state information determination unit determining, in response to reception of the transmission request of the push data from the application server, whether the in-vehicle communication device for which the reset state information is set corresponds to a transmission destination of the push data; a transmission suspension unit suspending transmission of the push data in response to determining that the reset state information is set for the in-vehicle communication device that corresponds to the transmission destination of the push data, the transmission suspension unit waiting for until the communication line between the push server and the in-vehicle communication device is reconnected by the in-vehicle communication device executing the reset; and an information transmission unit releasing, in response to the communication line being reconnected, a suspension on transmission of the push data and transmitting the push data to the in-vehicle communication device.

When the push server receives, from the application server, the transmission request of push data, if the reset state information is set in association with the in-vehicle communication device corresponding to the transmission destination of push data, the transmission of push data is suspended and the push server waits for completion of reconnection of communication line. The communication line, which was disconnected for the purpose of reset, is reconnected after the in-vehicle communication device executes the reset. When the communication line is reconnected, the suspension on transmission of push data is released, and the suspended push data is transmitted to the in-vehicle communication device. By suspending the transmission of push data in the reset state of the in-vehicle communication device, it is possible to prevent the push server from continuously failing to transmit the push data until the startup of in-vehicle communication device is completed and the communication line is reconnected. Further, it is also possible to prevent the push server from continuously retrying transmission of the push data. This configuration enables proper transmission of push data from the push server to the in-vehicle communication device.

### BRIEF DESCRIPTION OF DRAWINGS

The above and other objects, features and advantages of the present disclosure will become more apparent from the following detailed description made with reference to the accompanying drawings. In the drawings:
FIG. 1 is a diagram showing an overall configuration of a push system according to a first embodiment;
FIG. 2 is a functional block diagram of an in-vehicle communication device and a push server;
FIG. 3 is a sequence diagram;
FIG. 4 is a sequence diagram according to a second embodiment;
FIG. 5 is a sequence diagram according to the second embodiment;
FIG. 6 is a sequence diagram according to the second embodiment;
FIG. 7 is a functional block diagram of an in-vehicle communication device and a push server according to a third embodiment;
FIG. 8 is a sequence diagram;
FIG. 9 is a sequence diagram according to a fourth embodiment;
FIG. 10 is a sequence diagram according to a fifth embodiment;
FIG. 11 is a sequence diagram according to the fifth embodiment;
FIG. 12 is a sequence diagram according to a sixth embodiment; and
FIG. 13 is a sequence diagram according to a seventh embodiment.

### DESCRIPTION OF EMBODIMENTS

The following will describe embodiments of the present disclosure with reference to the accompanying drawings. Descriptions of parts common to multiple embodiments will be omitted.

### (First Embodiment)

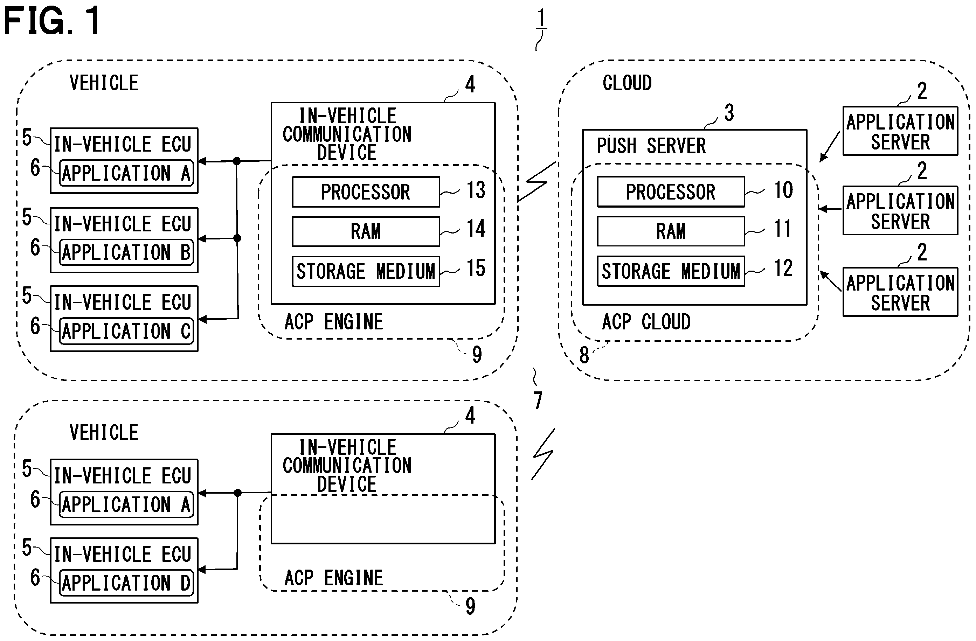

The first embodiment will be described with reference to FIG. 1 to FIG. 3. As shown in FIG. 1, a push system 1 includes an application server 2 and a push server 3, which are provided on cloud, and an in-vehicle communication device 4 and an in-vehicle ECU 5, which are provided to a vehicle. The in-vehicle ECU 5 is equipped with an application 6, which is also referred to as in-vehicle system application, for implementing a remote request service. The push system 1 enables transmission of push data from the application server 2 to the in-vehicle system application 6 when a cloud application is started by, for example, a smartphone terminal.

For example, when a user starts and performs a predetermined operation of an application on a smartphone terminal to remotely start a vehicle air conditioning device before boarding or lock doors after alighting from the vehicle, transmission request of push data instructing start of air conditioning device or lock of the doors is transmitted from the application server 2 to the push server 3, and the push server 3 transmits the push data to the in-vehicle ECU 5 via the in-vehicle communication device 4. Then the push data is transmitted to the in-vehicle system application 6 that performs the start of air conditioning device, the locking of doors, and the like.

FIG. 1 illustrates a configuration in which one push server 3 is provided for multiple application servers 2 on the cloud. Alternatively, multiple push servers 3 may be provided for multiple application servers 2. In one example, one in-vehicle communication device 4 is provided for multiple in-vehicle ECUs 5 in the vehicle. Alternatively, multiple in-vehicle communication devices 4 may be provided for multiple in-vehicle ECUs 5.

The push system 1 adopts an automotive wireless communication platform 7. The automotive wireless communication platform 7 includes an ACP cloud 8 provided on the cloud and an ACP engine 9 provided on the vehicle for function implementation purpose. The automotive wireless communication platform 7 enables a secure connection between the application server 2 and the application 6 for anytime and anywhere. For example, when the vehicle is parked, the power supply to the in-vehicle ECU 5 is turned off, and the power supply state is different from another in-vehicle ECU. The system configuration including the in-vehicle ECU 5 differs from vehicle to vehicle. The automotive wireless communication platform 7 conceals from the application server 2, such difference in the power supply state of in-vehicle ECU 5 and the difference in the system configurations of the vehicles. As a result, it is possible to implement a pseudo constant connection in which all the in-vehicle ECUs 5 are constantly connected to an external network for each vehicle.

A cloud system and the in-vehicle system in which the automotive wireless communication platform 7 is installed will be described below.

### (1) Cloud system

First, the in-vehicle system installed to the vehicle will be described. The application server 2 is a server that functions as a transmission request source of the push data. The application server 2 manages at least one of an application ID or a token for identifying the application 6. When transmitting the transmission request of push data to the push server 3, the application server 2 provides the application ID or the token as request information together with a message body to be transmitted to the application 6. When the token is used as the request information, the application server 2 reads out the token associated with the transmission destination of push data. The token serves as key information for determining the destination of push data in the push server 3 and the in-vehicle system.

The push server 3, which corresponds to a transmission source of the push data, includes an ACP cloud 8 that implements the cloud-related functions of the automotive wireless communication platform 7. The push server 3 mainly includes a microcontroller. The microcontroller includes a processor 10, a RAM 11, and a storage medium 12. The push server 3 executes, using the processor 10, a control program stored in the storage medium 12 to perform various operations, thereby implementing the cloud-related functions of the automotive wireless communication platform 7.

The push server 3 connects a communication line for wireless communication with the in-vehicle communication device 4 via a mobile communication network. The push server 3 is capable of transmitting push data to the in-vehicle communication device 4 in a connection state of the communication line. The mobile communication networks may be a mobile phone network, Wi-Fi (registered trademark), or V2X (Vehicle-to-Anything). When the push server 3 receives, from the application server 2, the transmission request of push data, the push server 3 selects the in-vehicle communication device 4, which is the transmission destination of push data, and transmits the push data to the in-vehicle communication device 4 selected as the destination.

The push server 3 provides, through TLS (Transport Layer Security) processing, functions such as authentication of communication partner, encryption of communication contents, and detection of tampering. The push server 3 provides functions of data communication using TCP/IP, UDP/IP and other protocols, thereby enabling secure data communication between the application server 2 and the in-vehicle communication device 4.

The push server 3 can retry transmission of push data within a predetermined time period. When transmitting the push data to the in-vehicle system, an immediate response is required from the in-vehicle system in some situations and it is sufficient that the push data reaches a notification destination in another situations. Thus, the retry period may set according to the required response. When the transmission of push data fails, the push server 3 retries transmission of the push data within a predetermined period before the elapse of retry period, based on the retry period set in accordance with the contents of push data. When the retry period has elapsed with the transmission of push data remaining failed, the push server 3 determines that the transmission of push data has failed, and ends the retry of transmitting the push data.

### (2) In-vehicle system

The following will describe the in-vehicle system equipped to the vehicle. The in-vehicle communication device 4 is also referred to as a TCU (Telematics Control Unit) or a DCM (Data Communication Module), and corresponds to a destination of push data. The in-vehicle communication device 4 includes the configuration of ACP engine 9 that implements the vehicle-related functions of the automotive wireless communication platform 7. The in-vehicle communication device 4 mainly includes a microcontroller. The microcontroller includes a processor 13, a RAM 14, and a storage medium 15. The in-vehicle communication device 4 executes, using the processor 13, a control program stored in the storage medium 15 to perform various operations, thereby implementing the vehicle-related functions of the automotive wireless communication platform 7.

The in-vehicle communication device 4 is connected to multiple in-vehicle ECUs 5 via an in-vehicle network. Examples of in-vehicle network include Ethernet (registered trademark), CAN (Controller Area Network, registered trademark), FLEXRAY (registered trademark), CXPI (Clock Extension Peripheral Interface, registered trademark), and LIN (Local Interconnect Network). The in-vehicle network may be provided for each system, such as a powertrain system, a chassis system, a body system, a multimedia system, and a safety system.

The in-vehicle communication device 4 connects a communication line with the push server 3 for wireless communication purpose via a mobile communication network. The in-vehicle communication device 4 is capable of receiving push data from the push server 3 when the communication line is in connected state. When the in-vehicle communication device 4 receives the push data from the push server 3, the in-vehicle communication device 4 selects an in-vehicle ECU 5, which is the destination of push data, and transmits the push data to the in-vehicle ECU 5 selected as the destination.

The in-vehicle communication device 4 provides, using TLS processing, functions such as authentication of the communication partner, encryption of communication contents, and detection of tampering, as well as providing a data communication function using TCP/IP, UDP/IP, and other protocols. In some situations, secure data communication is enabled between the in-vehicle communication device 4 and the push server 3, and secure data communication is also enabled between the in-vehicle communication device 4 and the in-vehicle ECU 5.

The in-vehicle communication device 4 can maintain an online state, which is a state connected to the communication network, even when the vehicle's main power supply is in off state, for example, in a case where the vehicle is in parked state, specifically, in a case where the ignition switch of vehicle is in off state. The in-vehicle communication device 4 monitors the connection state between the in-vehicle communication device 4 and the push server 3 via wireless communication, and monitors a transmission state of push data in the in-vehicle network. The in-vehicle communication device 4 cooperates with the push server 3 to enable confirmation of interconnection between the in-vehicle communication device 4 and the push server 3. The confirmation of interconnection between the in-vehicle communication device 4 and the push server 3 is also referred to as alive monitoring.

When the push data fails to reach the destination, the in-vehicle communication device 4 notifies the transmission source the transmission failure of push data together with information about the reason associated with the transmission failure. As an example, when the application 6 or the in-vehicle ECU 5 to which the push data is to be transmitted does not exist on the in-vehicle network, the in-vehicle communication device 4 notifies the push server 3, which is the transmission source of push data, of the transmission failure of push data together with the associated reason information indicating the reason of transmission failure.

The in-vehicle communication device 4 specifies transmission destination information and status information as ECU information related to the in-vehicle ECU 5, which corresponds to the transmission destination of push data. The transmission destination information may also be referred to as destination information. The destination information indicates the in-vehicle ECU 5 to which the push data is to be transmitted among multiple in-vehicle ECUs 5. The in-vehicle communication device 4 acquires the destination information by referring to the application ID or the token. The status information is information capable of specifying the power supply state (on state or off state) of the in-vehicle ECU 5, which corresponds to the transmission destination. A power-off state refers to a state in which the in-vehicle ECU 5 is switched from an active state to a sleep state or the like in response to the ignition switch being turned off. In the power-off state of the in-vehicle ECU 5, the in-vehicle ECU 5 is able to receive a start-up request with low power consumption, but is unable to perform data communication. When the power supply to the in-vehicle ECU 5, which corresponds to the transmission destination, is specified as off state based on the status information, the in-vehicle communication device 4 performs a startup process to start the in-vehicle ECU 5 and turn on the power supply (startup state).

The in-vehicle ECU 5 is equipped with one or more applications 6 and is capable of executing the applications. The in-vehicle ECU 5 mainly includes a microcontroller, and the microcontroller includes a processor (not shown), a RAM (not shown), and a storage medium (not shown). The in-vehicle ECU 5 executes, using the processor, various operations by executing control program stored in a storage medium, and operates as an end ECU that is the final destination of push data transmitted from the push server 3. When the in-vehicle ECU 5 receives the push data transmitted from the in-vehicle communication device 4, the in-vehicle ECU 5 identifies registration information that matches the application ID or token associated with the push data, identifies a destination application 6 from multiple applications 6 to which the push data is to be transmitted, and transmits the push data to the application 6 identified as the destination.

The in-vehicle ECU 5 provides a cryptographic processing function, thereby enabling secure data communication between the in-vehicle communication device 4 and the application 6. Unlike the in-vehicle communication device 4, the in-vehicle ECU 5 is basically turned off when the vehicle power supply is turned off in order to reduce power consumption. In the turn-off state, the in-vehicle ECU 5 is also disconnected from the communication network. Some in-vehicle ECU 5 may not be equipped with the application 6. The in-vehicle communication device 4 may also have the functions of the in-vehicle ECU 5 within the in-vehicle system, and the application 6 may be installed to the in-vehicle communication device 4.

In the above-described configuration, the in-vehicle communication device 4 needs to be reset periodically for purposes such as software updates, state recovery, memory cleanup, or the like. When the application server 2 transmits, to the push server 3, a request to transmit the push data when the in-vehicle communication device 4 is in the reset state, the push server 3 continuously fails to transmit the push data and continuously retries transmission of push data until the startup of in-vehicle communication device 4 is completed and the communication line is connected. With consideration of this point, in the present embodiment, the in-vehicle communication device 4 and the push server 3 each has the following functions.

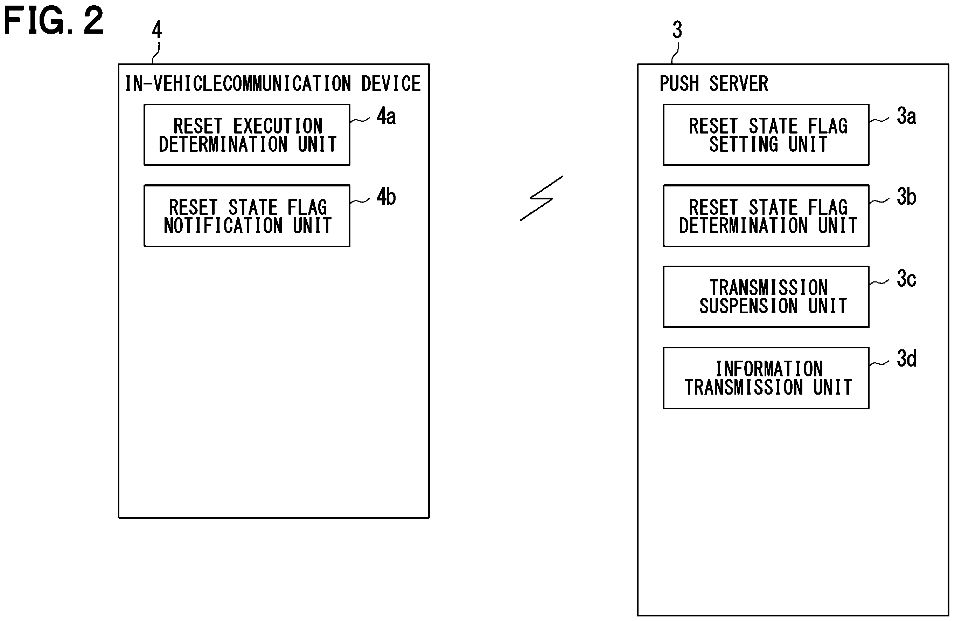

As shown in FIG. 2, the in-vehicle communication device 4 includes a reset execution determination unit 4a and a reset state flag notification unit 4b. The reset state flag notification unit 4b corresponds to a reset state information notification unit.

When a request event such as software update, state recovery, memory cleanup, or the like occurs, the reset execution determination unit 4a determines whether a reset can be executed by determining the operation state at that time. For example, the reset execution determination unit 4a determines that a reset can be executed in response to determining that there is no data communication with the in-vehicle ECU 5 and no problem will be occurred when the reset is executed. When the reset execution determination unit 4a determines that data communication is being performed with the in-vehicle ECU 5 and that a problem such as data loss or data omission may occur due to execution of reset, the reset execution determination unit 4a determines that the reset cannot be executed.

When the reset execution determination unit 4a determines that the reset can be executed, the reset state flag notification unit 4b associates a reset state flag, which indicates that a reset is in progress, with a device ID, which identifies the in-vehicle communication device 4, before starting the execution of reset, and then notifies the push server 3 of the reset state flag. The device ID corresponds to device identification information.

The push server 3 includes a reset state flag setting unit 3a, a reset state flag determination unit 3b, a transmission suspension unit 3c, and an information transmission unit 3d. The reset state flag setting unit 3a corresponds to a reset state information setting unit, and the reset state flag determination unit 3b corresponds to a reset state information determination unit.

When the reset state flag is notified from the in-vehicle communication device 4 to the push server 3, the reset state flag setting unit 3a identifies the in-vehicle communication device 4 that notified the reset state flag based on the device ID associated with the reset state flag, and sets the reset state flag in association with the in-vehicle communication device 4 that notified the reset state flag.

When the reset state flag determination unit 3b receives a transmission request of push data from the application server 2, the reset state flag determination unit 3b determines whether the reset state flag is set in association with the in-vehicle communication device 4, which corresponds to the transmission destination of push data.

When the reset state flag determination unit 3b determines that the reset state flag is set in association with the in-vehicle communication device 4 to which the push data is to be transmitted, the transmission suspension unit 3c suspends the transmission of push data and waits until reconnection of communication line, which was disconnected, is completed by executing the reset.

When the reconnection of communication line is completed, the information transmission unit 3d releases the suspension on transmission of push data by the transmission suspension unit 3c, and transmits the suspended push data to the in-vehicle communication device 4.

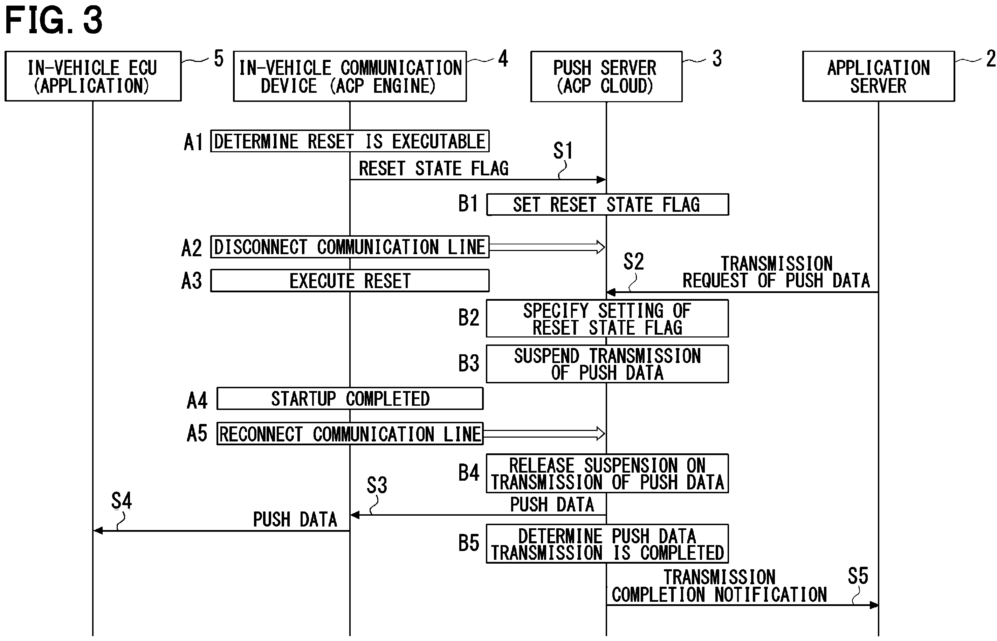

The operation of above-described configuration will be described with reference to FIG. 3.

When a request event such as software update, state recovery, memory cleanup, or the like occurs, the in-vehicle communication device 4 determines whether a reset can be executed by determining the operation state at that time. When the in-vehicle communication device 4 determines that a reset can be executed (A1), the in-vehicle communication device 4 notifies the push server 3 of a reset state flag (S1). When the push server 3 is notified of the reset state flag from the in-vehicle communication device 4, the push server 3 sets the reset state flag in association with the in-vehicle communication device 4 that is the transmission source of the reset state flag (B1). After notifying the push server 3 of the reset state flag, the in-vehicle communication device 4 disconnects the communication line connected between the in-vehicle communication device 4 and the push server 3 (A2), and executes the reset (A3).

When the push server 3 receives a transmission request of push data from the application server 2 (S2), the push server 3 determines whether the reset state flag is set in association with the in-vehicle communication device 4 to which the push data is to be transmitted. When the push server 3 determines that the reset state flag is set in association with the in-vehicle communication device 4 that is the destination of push data (B2), the push server 3 suspends the transmission of push data (B3). The push server 3 waits for the completion of reconnection of communication line that was disconnected as a result of reset executed by the in-vehicle communication device 4, which is the destination of the push data (B3). By suspending the transmission of push data, the push server 3 does not treat the transmission of push data as transmission failure even though the communication line is not connected between the push server 3 and the in-vehicle communication device 4, which is the destination of the push data.

When the in-vehicle communication device 4 has completed the reset and then completed startup (A4), the in-vehicle communication device 4 reconnects the communication line, which was disconnected due to the reset, with the push server 3 (A5). When the push server 3 determines that the communication line is reconnected, the push server 3 releases the suspension on transmission of push data (B4), and transmits the suspended push data to the in-vehicle communication device 4 (S3). When the in-vehicle communication device 4 receives the push data transmitted from the push server 3, the in-vehicle communication device 4 transmits the received push data to the in-vehicle ECU 5 (S4). When the push server 3 determines that transmission of push data to the in-vehicle communication device 4 is completed (B5), the push server 3 transmits, to the application server 2, a transmission completion notification (S5). When the in-vehicle ECU 5 receives the push data transmitted from the in-vehicle communication device 4, the in-vehicle ECU 5 transmits the push data to the destination application 6, starts the destination application 6, and controls the remote request service corresponding to the push data.

The above-described first embodiment provides following technical effects. When the in-vehicle communication device 4 determines that the reset can be executed, the in-vehicle communication device 4 notifies the push server 3 of the reset state flag in association with the device ID before starting execution of reset. By associating the reset state flag with the device ID and notifying the push server 3 of the reset state flag together with the device ID, the push server 3 can identify that the in-vehicle communication device 4 which is in the reset state based on the device ID, and can suspend transmission of push data until the in-vehicle communication device 4 has completed startup and reconnection of the communication line is completed. With above configuration, the push server 3 can avoid continuous failures in transmission of push data, and can avoid continuous retries when transmitting the push data. This configuration enables the in-vehicle communication device 4 to properly receive the push data from the push server 3 without the push server 3 continuously retrying to transmit the push data.

When the push server 3 receives, from the application server 2, the transmission request of push data, if the reset state flag is set in association with the in-vehicle communication device 4 corresponding to the transmission destination of push data, the transmission of push data is suspended and the push server 3 waits for completion of reconnection of communication line. The communication line, which was disconnected before, is reconnected in response to the in-vehicle communication device 4 executing the reset. When the communication line is reconnected, the suspension on transmission of push data is released, and the suspended push data is transmitted to the in-vehicle communication device 4. The push server 3 suspends the transmission of push data when the in-vehicle communication device 4 is in reset state. Thus, it is possible to prevent the push server 3 from continuously failing in transmission of push data until the in-vehicle communication device 4 completes startup and completes the connection of communication line. Thus, it is possible to prevent the push server 3 from continuously retrying the transmission of push data. This configuration enables proper transmission of push data to the in-vehicle communication device 4.

### (Second Embodiment)

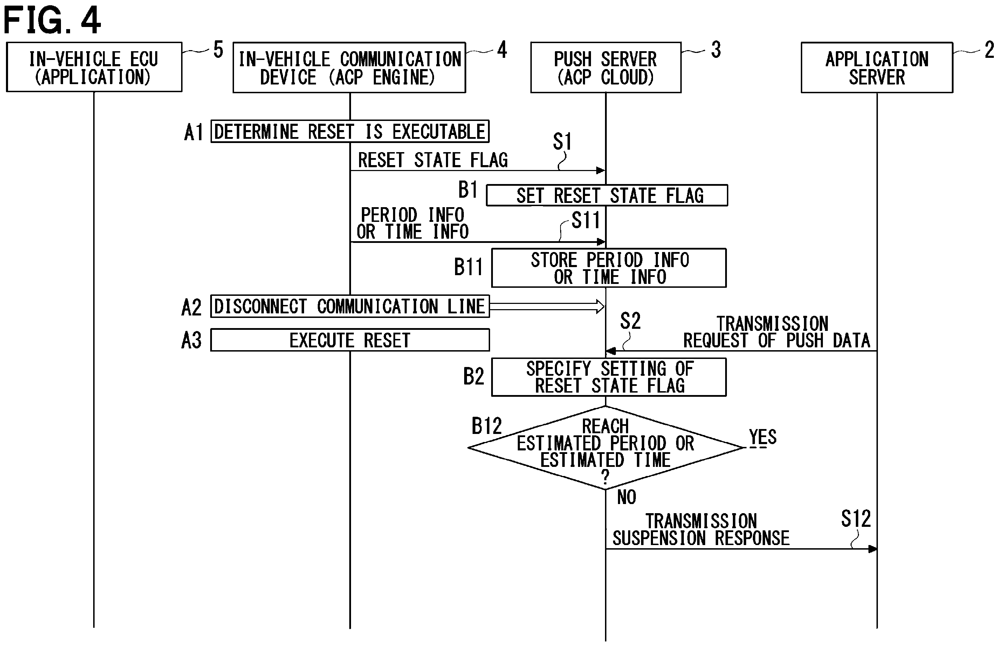

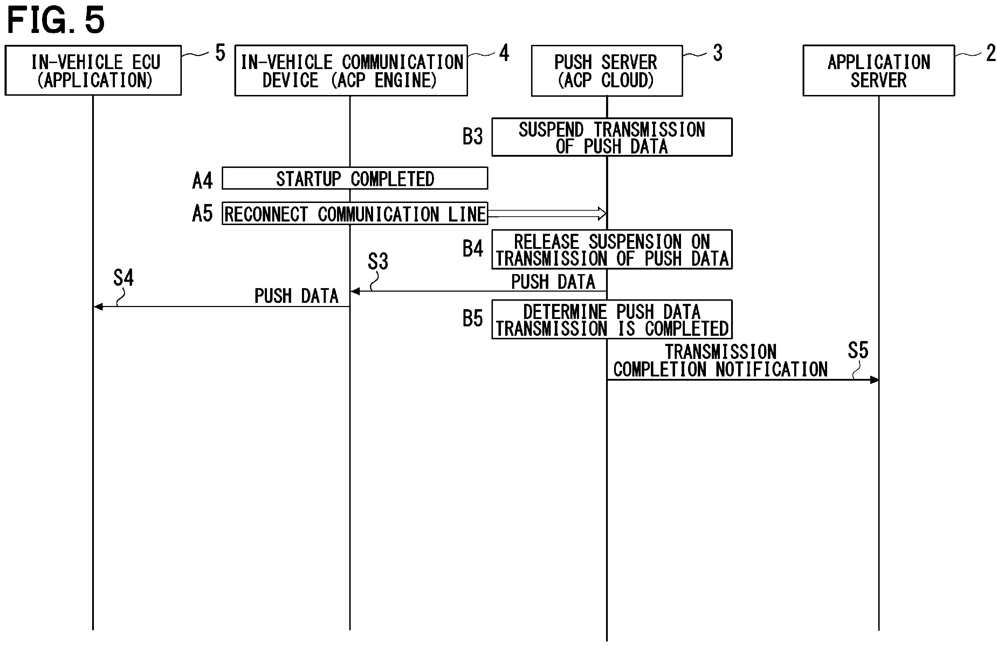

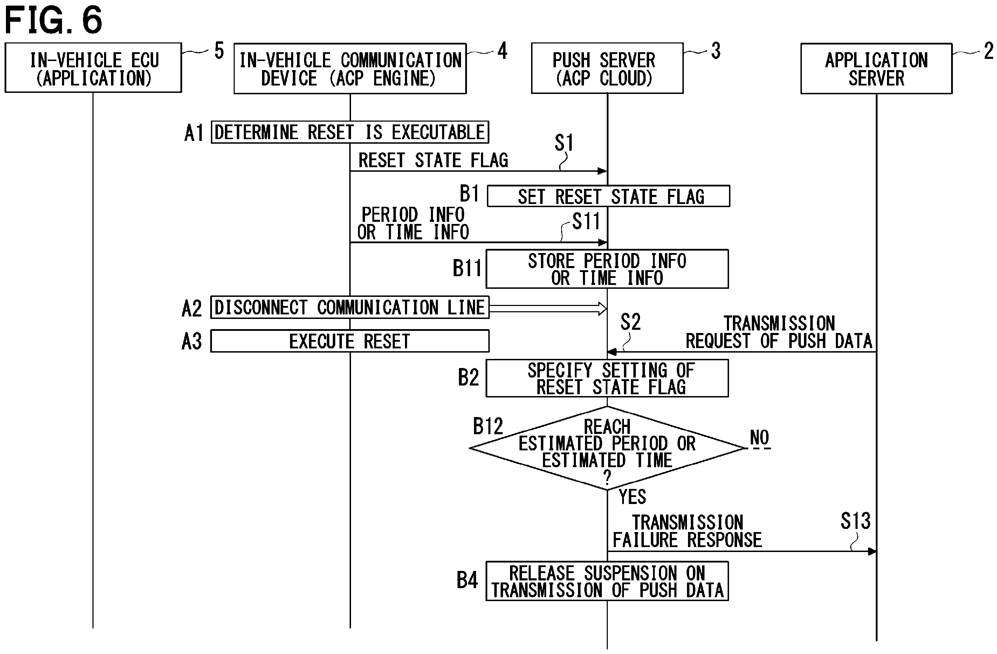

The following will describe a second embodiment with reference to FIG. 4 to FIG. 6. In the in-vehicle communication device 4, before starting the execution of reset, the reset state information notification unit 4b notifies the push server 3 of the reset state flag indicating that the reset is in progress. In addition, the in-vehicle communication device may notify the push server 3 of period information indicating the estimated period until the communication line is reconnected or time information indicating the estimated time point at which the reconnection is to be completed.

When the in-vehicle communication device 4 determines that the reset can be executed (A1), the in-vehicle communication device 4 notifies the push server 3 of the reset state flag (S1), and notifies the push server 3 of period information or time information (S11). When the push server 3 is notified of the reset state flag from the in-vehicle communication device 4, the push server 3 sets the reset state flag in association with the in-vehicle communication device 4 that is the transmission source of the reset state flag (B1). When the period information or the time information is notified from the in-vehicle communication device 4, the push server 3 stores the notified period information or time information (B11).

When the push server 3 receives a transmission request of push data from the application server 2 when the reset state flag is set and determines that the reset state flag is set in association with the in-vehicle communication device 4 to which the push data is to be transmitted (B2), the push server 3 determines whether the estimated period or the estimated time has been reached based on the stored period information or time information (B12). When the push server 3 determines that the estimated period or estimated time has not yet arrived (B12: NO), the push server 3 notifies the application server 2 of a transmission suspension response (S12) and suspends the transmission of push data (B3).

When the push server 3 determines that the estimated time or the estimated time has been reached, the push server 3 notifies the application server 2 of a transmission failure response (S13), and releases the suspension on transmission of push data (B4). That is, the push server 3 stops waiting for completion of reconnection of communication line. The communication line is reconnected from disconnected state as a result of the in-vehicle communication device 4, which corresponds to the transmission destination of push data, executing the reset. The push server 3 releases the suspension on transmission of push data, and determines that transmission of push data is failed due to failure in connection of the communication line between the push server 3 and the in-vehicle communication device 4, which corresponds to the destination of push data.

According to the second embodiment, the push server 3 receives the period information or time information from the in-vehicle communication device 4. Thus, the push server 3 can accurately determine that the offline state is temporary. The period required for reset differs for each in-vehicle communication device 4, and different periods can be appropriately handled by notifying the period information or time information.

### (Third Embodiment)

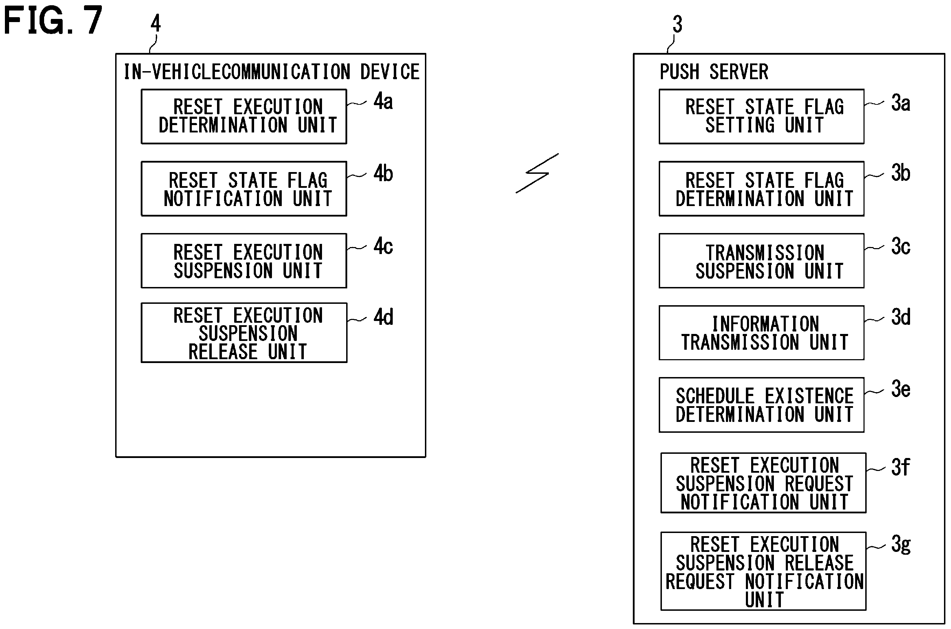

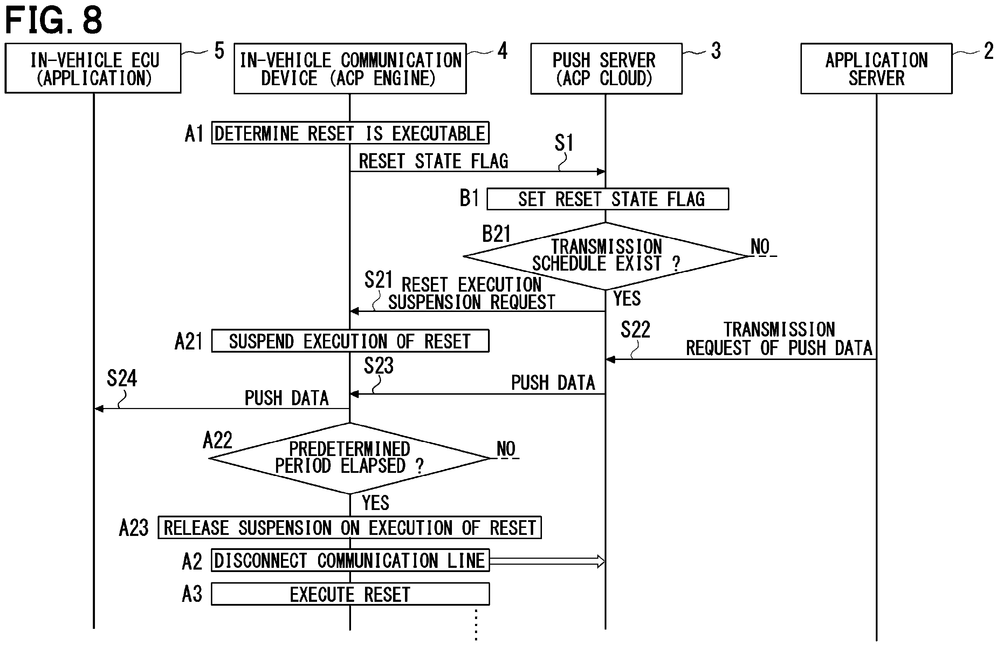

The following will describe a third embodiment with reference to FIG. 7 and FIG. 8. As shown in FIG. 7, the in-vehicle communication device 4 includes a reset execution determination unit 4a, a reset state flag notification unit 4b, a reset execution suspension unit 4c, and a reset execution suspension release unit 4d.

When the reset execution suspension unit 4c receives a reset execution suspension request from the push server 3, the reset execution suspension unit 4c suspends the execution of the reset. The reset execution suspension release unit 4d releases the suspended reset execution in response to elapse of a certain period from the reset execution is suspended, or the reset execution suspension release unit 4d releases the suspended reset execution in response to a request to release the suspension on the reset execution being notified from the push server 3.

The push server 3 includes a reset state flag setting unit 3a, a reset state flag determination unit 3b, a transmission suspension unit 3c, an information transmission unit 3d, a schedule existence determination unit 3e, a reset execution suspension request notification unit 3f, and a reset execution suspension release request notification unit 3g.

The schedule existence determination unit 3e determines whether there is a schedule to transmit the push data within a predetermined period. When the schedule existence determination unit 3e determines that there is a schedule to transmit the push data within a predetermined period, the reset execution suspension request notification unit 3f notifies the in-vehicle communication device 4 of a reset execution suspension request. The reset execution suspension release request notification unit 3g notifies the in-vehicle communication device 4 of a reset execution suspension release request.

The operation of above-described configuration will be described with reference to FIG. 8.

When the push server 3 is notified of a reset state flag from the in-vehicle communication device 4, the push server sets a reset state flag in association with the in-vehicle communication device 4, which corresponds to the transmission source of the reset state flag (B1). Then, the push server 3 determines whether there is a schedule to transmit push data within a predetermined period (B21). When the push server 3 determines that the push data is scheduled to be transmitted within the predetermined period (B21: YES), the push server 3 notifies the vehicle communication device 4 of a reset execution suspension request that requests the in-vehicle communication device 4 to suspend the execution of reset (S21).

When the in-vehicle communication device 4 receives the reset execution suspension request from the push server 3, the in-vehicle communication device 4 suspends the execution of reset (A21), monitors the elapsed time since the execution of reset was suspended, and determines whether the time elapsed from when the execution of reset is suspended reaches the predetermined period (A22).

When the push server 3 receives a transmission request of push data from the application server 2 (S22) before elapse of the predetermined period from when the execution of reset was suspended in the in-vehicle communication device 4, the push server 3 transmits the push data to the in-vehicle communication device 4 (S23) since the execution of reset is being suspended in the in-vehicle communication device 4. When the in-vehicle communication device 4 receives the push data transmitted from the push server 3, the in-vehicle communication device 4 transmits the received push data to the in-vehicle ECU 5 (S24).

When the in-vehicle communication device 4 determines that the predetermined period has elapsed from when the execution of reset was suspended (A22: YES), the in-vehicle communication device 4 releases the suspension on the execution of reset (A23), disconnects the communication line between the in-vehicle communication device 4 and the push server 3 (A2), and executes the reset (A3). The process after A3 is same as the first embodiment, and detailed description will be omitted.

According to the third embodiment, the reset state flag is set in the push server 3. In response to determining that the push data is scheduled to be transmitted within the predetermined period, the reset execution suspension request is notified to the in-vehicle communication device 4, so that the push data can be transmitted to the in-vehicle communication device 4 before the in-vehicle communication device 4 executes the reset. After the predetermined period has elapsed since the execution of reset was suspended in the in-vehicle communication device 4, the in-vehicle communication device 4 can execute the reset.

### (Fourth Embodiment)

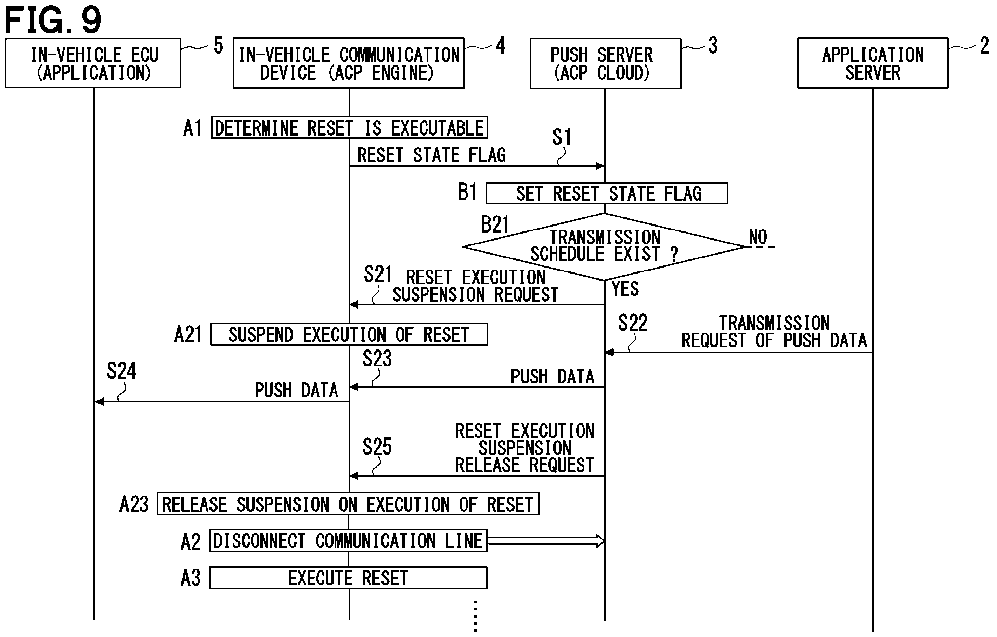

The following will describe a fourth embodiment with reference to FIG. 9.

When the push server 3 determines that the push data is scheduled to be transmitted within the predetermined period (B21: YES), the push server 3 notifies the in-vehicle communication device 4 of a reset execution suspension request (S21). When the predetermined period has elapsed from notification of the reset execution suspension request to the in-vehicle communication device 4, the push server 3 notifies the in-vehicle communication device 4 of a reset execution suspension release request (S25).

When the push server 3 receives a transmission request of push data from the application server 2 (S22) before notifying the in-vehicle communication device 4 of the reset execution suspension release request for requesting the in-vehicle communication device to release the suspension on the execution of reset, the push server 3 transmits the push data to the in-vehicle communication device 4 (S23) since the execution of reset is suspended in the in-vehicle communication device 4. When the in-vehicle communication device 4 receives the push data transmitted from the push server 3, the in-vehicle communication device 4 transmits the received push data to the in-vehicle ECU 5 (S24).

When the in-vehicle communication device 4 receives, from the push server 3, the reset execution suspension release request, the in-vehicle communication device 4 releases the suspension on the reset execution (A23), disconnects the communication line between the in-vehicle communication device 4 and the push server 3 (A2), and executes the reset (A3). The process after A3 is same as the first embodiment, and detailed description will be omitted.

Similar to the third embodiment, according to the fourth embodiment, the reset state flag is set in the push server 3. In response to determining that the push data is scheduled to be transmitted within the predetermined period, the reset execution suspension request is notified to the in-vehicle communication device 4, so that the push data can be transmitted to the in-vehicle communication device 4 before the in-vehicle communication device 4 executes the reset. The push server 3 notifies the in-vehicle communication device 4 of the reset execution suspension release request. Thus, the in-vehicle communication device 4 can execute the reset in response to reception of the reset execution suspension release request.

### (Fifth Embodiment)

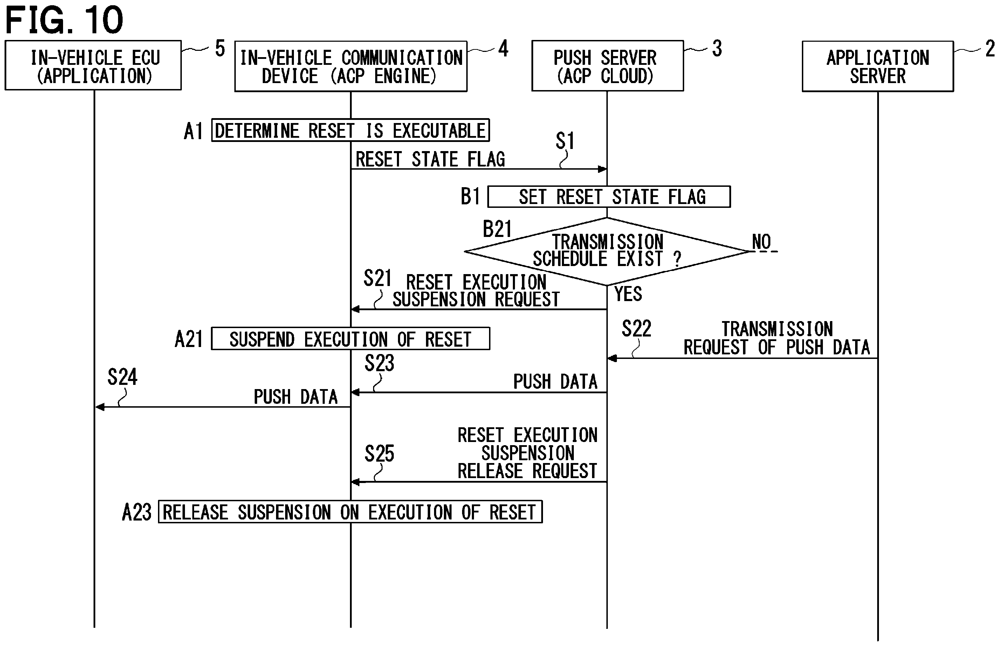

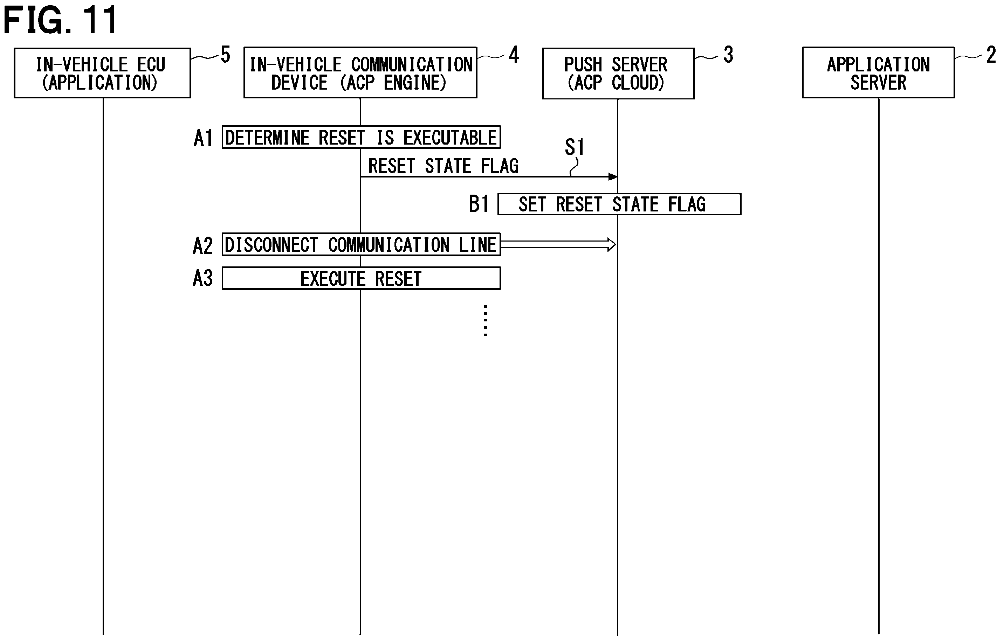

The following will describe a fifth embodiment with reference to FIG. 10 and FIG. 11.

When the in-vehicle communication device 4 receives, from the push server 3, a reset execution suspension release request for releasing the suspended execution of reset, the in-vehicle communication device 4 releases the suspension on the execution of reset (A23). When the in-vehicle communication device 4 determines that the reset can be executed (A1), the in-vehicle communication device 4 notifies the push server 3 of the reset state flag (S1). When the push server 3 is notified of the reset state flag from the in-vehicle communication device 4, the push server 3 sets the reset state flag in association with the in-vehicle communication device 4, which corresponds to the transmission source of the reset state flag (B1). After notifying the push server 3 of the reset state flag, the in-vehicle communication device 4 disconnects the communication line connected between the in-vehicle communication device 4 and the push server 3 (A2), and executes the reset (A3).

As described above, according to the fifth embodiment, when the in-vehicle communication device 4 determines that the reset can be executed after the suspension on the execution of reset is released, the in-vehicle communication device 4 can notify the push server 3 of the reset state flag.

### (Sixth Embodiment)

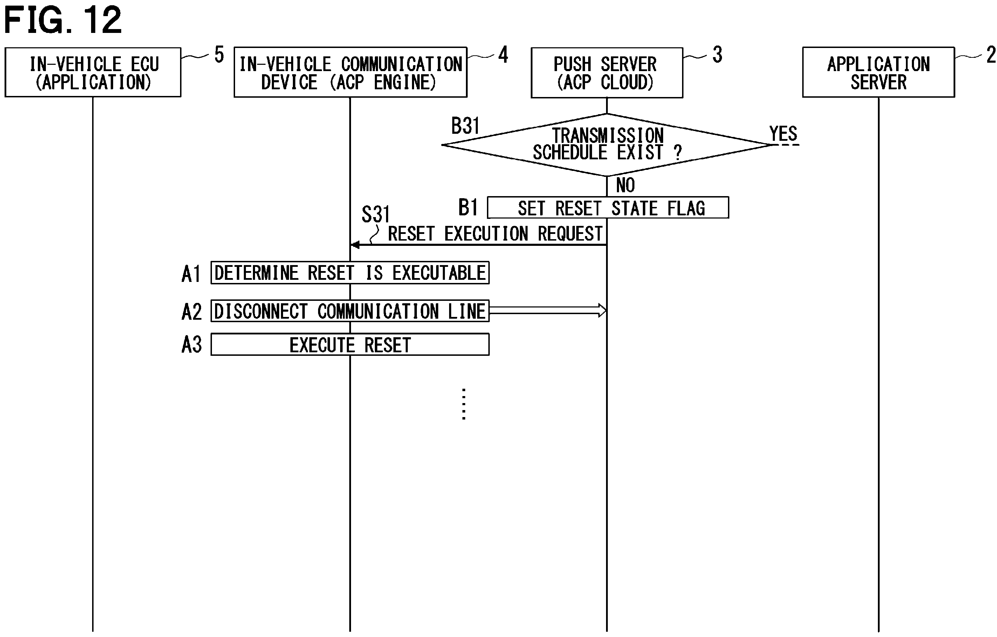

The following will describe a sixth embodiment with reference to FIG. 12.

The push server 3 determines whether the push data is scheduled to be transmitted within a predetermined period (B31). When the push server 3 determines that there is no schedule to transmit the push data within the predetermined period (B31: NO), the push server 3 sets a reset state flag (B1) and notifies the vehicle communication device 4 of a reset execution request (S31).

When the in-vehicle communication device 4 receives, from the push server 3 the reset execution request that requests execution of reset, the in-vehicle communication device 4 determines whether the reset can be executed. In response to determining that the reset can be executed (A1), the in-vehicle communication device 4 disconnects the communication line between the in-vehicle communication device 4 and the push server 3 (A2), and executes the reset (A3). The process after A3 is same as the first embodiment, and detailed description will be omitted.

As described above, according to the sixth embodiment, the push server 3 notifies the in-vehicle communication device 4 of the reset execution request, thereby enabling the in-vehicle communication device 4 to execute the reset.

### (Seventh Embodiment)

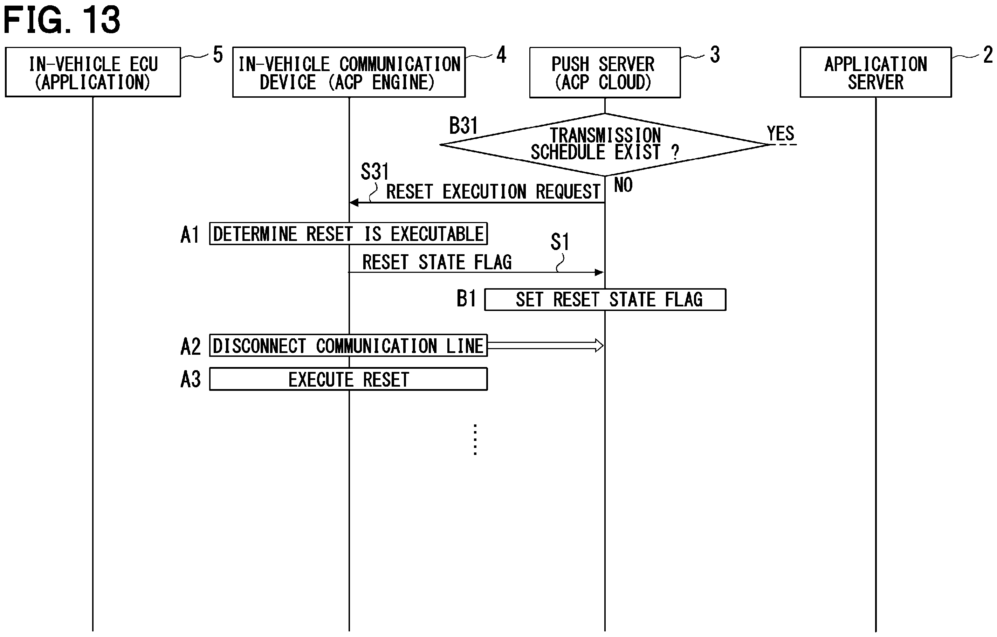

The following will describe a seventh embodiment with reference to FIG. 13. The push server 3 determines whether the push data is scheduled to be transmitted within a predetermined period (B31). When the push server 3 determines that there is no schedule to transmit the push data within the predetermined period (B31: NO), the push server 3 notifies the vehicle communication device 4 of a reset execution request that requests the in-vehicle communication device 4 to execute the reset (S31).

When the in-vehicle communication device 4 receives the reset execution request from the push server 3, the in-vehicle communication device 4 determines whether the reset can be executed. In response to determining that the reset can be executed (A1), the in-vehicle communication device 4 notifies the push server 3 of the reset state flag (S1). When the push server 3 is notified of the reset state flag from the in-vehicle communication device 4, the push server 3 sets the reset state flag in association with the in-vehicle communication device 4, which corresponds to the transmission source of the reset state flag (B1). After notifying the push server 3 of the reset state flag, the in-vehicle communication device 4 disconnects the communication line connected between the in-vehicle communication device 4 and the push server 3 (A2), and executes the reset (A3). The process after A3 is same as the first embodiment, and detailed description will be omitted.

Similar to the sixth embodiment, according to the seventh embodiment, the in-vehicle communication device 4 can execute the reset when the push server 3 notifies the in-vehicle communication device 4 of the reset execution request.

### (Other Embodiments)

While the present disclosure has been described based on the above embodiments, the present disclosure is not limited to the embodiments or structures described herein. The present disclosure includes various modification examples and equivalents thereof. Various combinations and configurations, as well as other combinations and configurations including more, less, or only a single element, are within the scope and spirit of the present disclosure.

In the foregoing embodiments, each function provided by the push server 3 or the in-vehicle communication device 4 may be implemented in software manner or hardware manner. For example, the functions of push server 3 and the in-vehicle communication device 4 may be implemented only in software manner, only in hardware manner, or a combination of software manner and hardware manner. When such functions are provided by electronic circuits as hardware implementation, each function may be provided by a digital circuit including a large number of logic circuits, or an analog circuit.

The processor 10 of the push server 3 and the processor 13 of the in-vehicle communication device 4 each includes at least one arithmetic core such as a CPU (Central Processing Unit). A processing circuit including the processor 10 or the processor 13 may be configured mainly using an FPGA (Field-Programmable Gate Array) and an ASIC (Application-Specific Integrated Circuit).

The storage medium 12 of the push server 3 and the storage medium 15 of the in-vehicle communication device 4 each may include a non-volatile storage medium. The implementation of each storage medium 12, 15 may be changed as appropriate. For example, each storage medium 12, 15 is not limited to being provided on a circuit board, but may be provided in the form of a memory card or the like and may be configured to be electrically connected to the processing circuits of the push server 3 and the in-vehicle communication device 4 by being inserted into a slot portion. Furthermore, each storage medium 12, 15 may be provided by an optical disk or a hard disk drive, etc., from which the program can be read out.

The controller and the method thereof described in the present disclosure may be implemented by a dedicated computer provided by configuring a processor and a memory programmed to execute one or more functions embodied by a computer program. Alternatively, the controller and the method thereof described in the present disclosure may be implemented by a dedicated computer provided by configuring a processor with one or more dedicated hardware logic circuits. Alternatively, the controller and the method thereof described in the present disclosure may be implemented by one or more dedicated computers configured by a combination of (i) a processor and a memory programmed to execute one or more functions and (ii) a processor including one or more hardware logic circuits. The computer program may be stored in a computer-readable non-transitory tangible storage medium as instructions to be executed by a computer.

## Claims

1. An in-vehicle communication device (4) transmitting, to an in-vehicle electronic control unit, push data in response to receiving the push data from a push server, the push server transmitting the push data to the in-vehicle communication device in response to reception of a transmission request of the push data from an application server, the in-vehicle communication device comprising:
a reset execution determination unit (4a) determining whether a reset of the in-vehicle communication device is executable; and
a reset state information notification unit (4b) notifying, in response to determining that the reset of the in-vehicle communication device is executable, the push server of reset state information, which indicates that the in-vehicle communication device is in a reset state, in association with device identification information of the in-vehicle communication device before starting the reset of the in-vehicle communication device, wherein the device identification information enables identifying of the in-vehicle communication device.

2. The in-vehicle communication device according to claim 1, wherein
the reset state information notification unit notifies the push server of the reset state information, and further notifies the push server of period information indicating an estimated period of time until reconnection of a communication line between the in-vehicle communication device and the push server is completed or time information indicating an estimated time at which the reconnection of the communication line between the in-vehicle communication device and the push server is completed.

3. The in-vehicle communication device according to claim 1 or 2, further comprising
a reset execution suspension unit (4c) that suspends execution of the reset in response to reception of a reset execution suspension request from the push server.

4. The in-vehicle communication device according to claim 3, further comprising
a reset execution suspension release unit (4d) that releases suspension on the execution of the reset in response to a predetermined period being elapsed from when the execution of the reset is suspended.

5. The in-vehicle communication device according to claim 3, further comprising
a reset execution suspension release unit (4d) that releases suspension on the execution of the reset in response to reception of a reset execution suspension release request from the push server.

6. A push server (3) transmitting, in response to reception of a transmission request of push data from an application server, the push data to an in-vehicle communication device, a communication line between the push server and the in-vehicle communication device being disconnected when the in-vehicle communication device executes a reset, the push server comprising:
a reset state information setting unit (3a) setting reset state information, which indicates that the in-vehicle communication device is in a reset state, in association with the in-vehicle communication device that corresponds to a transmission source of the reset state information;
a reset state information determination unit (3b) determining, in response to reception of the transmission request of the push data from the application server, whether the in-vehicle communication device for which the reset state information is set corresponds to a transmission destination of the push data;
a transmission suspension unit (3c) suspending transmission of the push data in response to determining that the reset state information is set for the in-vehicle communication device that corresponds to the transmission destination of the push data, the transmission suspension unit waiting for until the communication line between the push server and the in-vehicle communication device is reconnected by the in-vehicle communication device executing the reset; and
an information transmission unit (3d) releasing, in response to the communication line being reconnected, a suspension on transmission of the push data and transmitting the push data to the in-vehicle communication device.

7. The push server according to claim 6, wherein,
in response to receiving the reset state information from the in-vehicle communication device, the reset state information setting unit sets the reset state information in association with the in-vehicle communication device that transmitted the reset state information.

8. The push server according to claim 6 or 7, wherein
the in-vehicle communication device suspends execution of the reset in response to reception of a reset execution suspension request from the push server, and
the push server further includes:
a schedule existence determination unit (3e) determining whether there is a schedule of transmitting the push data within a predetermined period; and
a reset execution suspension request notification unit (3f) transmitting, to the in-vehicle communication device, a reset execution suspension request for suspending the execution of the reset in response to determining that there is the schedule of transmitting the push data within the predetermined period.

9. The push server according to claim 8, wherein
the in-vehicle communication device releases a suspension on the execution of the reset in response to reception of a reset execution suspension release request from the push server, and
the push server further includes a reset execution suspension release request notification unit (3g) that transmits, to the in-vehicle communication device, a reset execution suspension release request for releasing the suspension on the execution of the reset after the reset execution suspension request notification unit transmits the reset execution suspension request to the in-vehicle communication device.
